# EUROPEAN PATENT APPLICATION

(11) **EP 3 805 342 A1**
(43) Date of publication of application: **14.04.2021**
(21) Application number: 19812272.3
(22) Date of filing: 16.05.2019
(51) Int. Cl.: C10M 137/12, C10M 137/04, F16F 9/32, C10N 30/06, C10N 30/10, C10N 40/00, C10N 40/04, C10N 40/06

(54) **LUBRICATING OIL COMPOSITION FOR DRIVE SYSTEM DEVICE, PRODUCTION METHOD THEREOF, METHOD FOR LUBRICATING DRIVE SYSTEM DEVICE, AND DRIVE SYSTEM DEVICE**

(30) Priority: 30.05.2018 JP 2018103585
(71) Applicant: Idemitsu Kosan Co.,Ltd., Chiyoda-ku Tokyo 100-8321 (JP)
(72) Inventor: SAKANOUE, Shuichi, Ichihara-shi, Chiba 299-0107 (JP); HAMACHI, Tatsuya, Ichihara-shi, Chiba 299-0107 (JP); KADONOSAWA, Shota, Ichihara-shi, Chiba 299-0107 (JP)
(74) Representative: Vossius & Partner Patentanwälte Rechtsanwälte mbB
(86) International application number: PCT/JP2019/019458
(87) International publication number: WO 2019/230412

(57) **Abstract**

The present invention relates to a lubricating oil composition for drive system apparatus having excellent wear resistance and oxidation stability and a method for producing the same, a lubrication method of a drive system apparatus using the foregoing lubricating oil composition, and a drive system apparatus.

## Description

### Technical Field

The present invention relates to a lubricating oil composition for drive system apparatus and a method for producing the same, a lubrication method of a drive system apparatus, and a drive system apparatus.

### Background Art

In a drive system apparatus, such as a shock absorber to be used for an automobile, e.g., a four-wheel vehicle and a two-wheel vehicle, and an earthquake resistant mechanism of housing, a transmission, or the like, a part, such as a sliding bearing and a piston ring, is installed, and a lubricating oil composition is used for lubrication of a sliding portion generated in such a part. For example, a lubricating oil composition which is used for the shock absorber is required to have not only a performance of lubricating the sliding portion in the aforementioned part in the shock absorber but also a performance such that it is charged in the shock absorber and forms a fluid resistance on the occasion when a piston expands and contracts, so as to attenuate vibration transmitted from the road surface to the vehicle body for the automobile shock absorber and vibration caused due to earthquake or the like for the housing shock absorber. For example, in the automobile shock absorber, the sliding bearing is called a bush in the business world of shock absorber and is a part sliding together with a piston rod. By optimizing friction characteristics in the sliding portions between a piston rod and a bush, and between an inner tube and a piston ring, etc., not only the ride quality of the automobile is controlled, but also friction and wear of the part are prevented from occurring, thereby revealing durability.

The lubricating oil composition which is used for the drive system apparatus, such as a shock absorber and a transmission, in which the part accompanied with a sliding portion, such as a sliding bearing and a piston ring, is installed, wear resistance is required especially as a performance of lubricating the sliding portion. As a lubricating oil composition having such a performance, there are, for example, proposed a lubricating oil composition in which a base oil is blended with an anti-wear agent, such as a zinc dialkyldithiophosphate (ZnDTP), and an extreme pressure agent, such as tricresyl phosphate; and a lubricating oil composition for automobile shock absorber, in which a lubricating oil base oil is blended with an acidic phosphorous acid diester, such as dioleyl hydrogenphosphite and dilauryl hydrogenphosphite (see, for example, PTL 1).

### Citation List

### Patent Literature

PTL 1: JP 2003-147379 A

### Summary of Invention

### Technical Problem

Now, a polytetrafluoroethylene (hereinafter occasionally referred as "PTFE") material having self-lubricating properties is occasionally used for a part, such as a sliding bearing and a piston ring, and for example, there are a sliding bearing made of a PTFE-coated sintered bronze material; and a PTFE material-made piston ring. In view of the fact that the PTFE material is a soft material itself, it is blended with a reinforcing material, such as a glass fiber, graphite, and a carbon fiber, and it involves such a problem that a lowering of durability of the drive system apparatus occasionally occurs in the sliding portion due to wear to be caused by such a reinforcing material. For example, the lowering of durability occurs due to the fact that with an increase of wear loss due to the wear occurring in the sliding direction on an inner tube coming into contact with the piston ring made of the PTFE material having a glass fiber blended therein as the reinforcing material, an opening of the sliding portion is widened, so that an attenuation performance is lowered, resulting in impairing the performance of the shock absorber. Therefore, in order to improve the durability of the drive system apparatus, such as the shock absorber, it is important to improve the wear resistance of the lubricating oil composition, thereby suppressing the occurrence of a wear mark in the sliding portion.

As for the lubrication of the sliding portion in the drive system apparatus, there is lubrication in the sliding portion of a part using a PTFE material along with lubrication between metals, namely lubrication between the reinforcing material-containing PTFE material and the metal. In addition, as for the lubrication of the sliding portion in a sliding bearing, a piston ring, or the like, there are chiefly two types of lubrications including lubrication in a state that a part, such as a piston rod and an inner tube, in the vicinity of the center of the sliding portion continuously moves; and lubrication in a state that the foregoing part in the end of the sliding portion starts to move from the stopped state. For that reason, the lubricating oil composition has been required to have wear resistance capable of adapting to these different types of lubrications.

Following increasing in size of an automobile (displacement increase) or improvement in performance improvement, a lubricating oil composition to be used for this is required to have high oxidation stability. As for the transmission, a variety of new transmissions, such as an automatic transmission, a belt type continuously variable transmission, a chain type continuously variable transmission, and a dual transmission, are developed in place of a manual transmission. In order to develop a lubricating oil composition adapting to such a transmission, it becomes necessary to blend a large number of additives. In general, when additives are added, the oxidation stability tends to become worse, and therefore, it becomes necessary to add an additive capable of improving the oxidation stability, or to select an additive which does not worsen the oxidation stability. Some of additives to be used for a lubricating oil composition for shock absorber worsen the oxidation stability depending upon the kind thereof. In that case, it is necessary to add an additive capable of improving the oxidation stability, or to select an additive which does not worsen the oxidation stability.

However, though the lubricating oil composition in which a base oil is blended with an anti-wear agent, such as a zinc dialkyldithiophosphate (ZnDTP) exhibits an effect against the oxidation stability, it is inferior in wear resistance, especially wear resistance regarding a galling mark in a sliding end; and though the lubricating oil composition in which an extreme pressure agent, such as tricresyl phosphate, is blended exhibits an effect against the oxidation stability, it is inferior in wear resistance in the center and end of the sliding portion. In addition, though the lubricating oil composition described in PTL 1, in which an acidic phosphorous acid diester, such as dioleyl hydrogenphosphite and dilauryl hydrogenphosphite, and so on are blended, exhibits an effect against the wear resistance, it is inferior in the oxidation stability. In the light of the above, according to the conventional lubricating oil compositions, it is in a situation that any material capable of making both wear resistance and oxidation stability compatible with each other at a high level as required for lubricating oil composition for drive system apparatus is not available.

In view of the aforementioned circumstances, the present invention has been made, and an object thereof is to provide a lubricating oil composition for drive system apparatus having excellent wear resistance and oxidation stability and a method for producing the same, a lubrication method of a drive system apparatus using the foregoing lubricating oil composition, and a drive system apparatus.

### Solution to Problem

In view of the aforementioned problem, the present inventors made extensive and intensive investigations. As a result, it has been found that the aforementioned problem can be solved by the following inventions. Specifically, the present invention is to provide a lubricating oil composition for drive system apparatus having the following constitution and a method for producing the same, a lubrication method of a drive system apparatus using the foregoing lubricating oil composition, and a drive system apparatus.

1. A lubricating oil composition for drive system apparatus containing a base oil and a phosphorus-containing compound represented by the general formula (1): 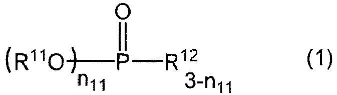 wherein,
   R¹¹ and R¹² each independently represent a monovalent hydrocarbon group having 1 or more and 30 or less carbon atoms; and n₁₁ represents an integer of 1 or 2.
2. The lubricating oil composition for drive system apparatus as set forth in the above 1, wherein in the general formula (1), R¹¹ is a monovalent aliphatic hydrocarbon group having 1 or more and 12 or less carbon atoms.
3. The lubricating oil composition for drive system apparatus as set forth in the above 1 or 2, wherein in the general formula (1), R¹² is a monovalent aliphatic hydrocarbon group having 4 or more and 24 or less carbon atoms.
4. The lubricating oil composition for drive system apparatus as set forth in any one of the above 1 to 3, wherein in the general formula (1), the hydrocarbon group is an alkyl group or an alkenyl group.
5. The lubricating oil composition for drive system apparatus as set forth in any one of the above 1 to 4, wherein in the general formula (1), the carbon number of R¹² is larger than the carbon number of R¹¹.
6. The lubricating oil composition for drive system apparatus as set forth in any one of the above 1 to 5, wherein in the general formula (1), R¹¹ is an alkyl group having 1 or more and 6 or less carbon atoms, and R¹² is an alkyl group having 7 or more and 20 or less carbon atoms.
7. The lubricating oil composition for drive system apparatus as set forth in any one of the above 1 to 6, wherein the content of the phosphorus-containing compound on the basis of the whole amount of the composition is 0.05% by mass or more and 3.0% by mass or less.
8. The lubricating oil composition for drive system apparatus as set forth in any one of the above 1 to 7, wherein the drive system apparatus is a shock absorber.
9. A method for producing a lubricating oil composition for drive system apparatus, including blending a base oil and a phosphorus-containing compound represented by the following general formula (1): 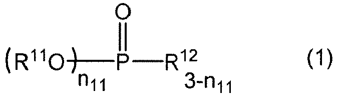 wherein,
   R¹¹ and R¹² each independently represent a monovalent hydrocarbon group having 1 or more and 30 or less carbon atoms; and n₁₁ represents an integer of 1 or 2.
10. A lubrication method of a drive system apparatus, including using the lubricating oil composition for drive system apparatus as set forth in any one of the above 1 to 8.
11. The lubrication method of a drive system apparatus as set forth in the above 10, wherein the drive system apparatus is one provided with a part using polytetrafluoroethylene.
12. The lubrication method of a drive system apparatus as set forth in the above 10 or 11, wherein the drive system apparatus is a shock absorber.
13. A drive system apparatus including using the lubricating oil composition for drive system apparatus as set forth in any one of the above 1 to 8.
14. The drive system apparatus as set forth in the above 13, wherein the drive system apparatus is one provided with a part using polytetrafluoroethylene.
15. The drive system apparatus as set forth in the above 13 or 14, which is a shock absorber.

### Advantageous Effects of Invention

In accordance with the present invention, it is possible to provide a lubricating oil composition for drive system apparatus having excellent wear resistance and oxidation stability and a method for producing the same, a lubrication method of a drive system apparatus using the foregoing lubricating oil composition, and a drive system apparatus.

### Description of Embodiments

An embodiment of the present invention (hereinafter occasionally referred to simply as "present embodiment") is hereunder described. In this specification, the numeral values with "or more" or "or less" relating to the numeral value ranges are a numeral value that can be arbitrarily combined.

### [Lubricating Oil Composition for Drive System Apparatus]

The lubricating oil composition for drive system apparatus of the present embodiment is one containing a base oil and a phosphorus-containing compound represented by the following general formula (1). Components which the lubricating oil composition for drive system apparatus of the present embodiment may contain are hereunder specifically described. 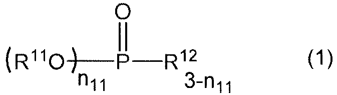 In the general formula (1), R¹¹ and R¹² each independently represent a monovalent hydrocarbon group having 1 or more and 30 or less carbon atoms; and n₁₁ represents an integer of 1 or 2.

### (Phosphorus-containing compound)

The lubricating oil composition for drive system apparatus of the present embodiment is required to contain a phosphorus-containing compound represented by the following general formula (1) (hereinafter occasionally referred to simply as "phosphorus-containing compound"). As represented by the general formula (1), the phosphorus-containing compound is a compound having a structure in which -OR¹¹ (hereinafter occasionally referred to as "hydrocarbyloxy group") and R¹² (hydrocarbon group) are connected with the phosphorus atom.

When the lubricating oil composition for drive system apparatus of the present embodiment does not contain the phosphorus-containing compound, excellent wear resistance and oxidation stability cannot be obtained at the same time. Here, the wear resistance includes wear resistance against lubrication in the vicinity of the center of the sliding portion (performance for suppressing the occurrence of a wear mark) and wear resistance against lubrication in the end of the sliding portion (performance for suppressing the occurrence of a galling mark). In addition, what the wear resistance is excellent means that the performance for suppressing the occurrence of a wear mark and the performance for suppressing the occurrence of a galling mark are excellent not relying upon the material relating to the sliding portion, namely the material relating to the sliding portion being not limited to metal-metal but even the reinforcing material-blended PTFE material-metal. Therefore, as for the lubricating oil composition for drive system apparatus of the present embodiment, by using the aforementioned phosphorus-containing compound, it may have not only the performance for suppressing the occurrence of two marks having different properties from each other, namely the excellent wear resistance such that the performance for suppressing the occurrence of a wear mark and the performance for suppressing a galling mark are revealed at the same time, but also oxidation stability.

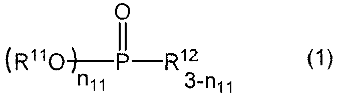

In the general formula (1), R¹¹ and R¹² each independently represent a monovalent hydrocarbon group having 1 or more and 30 or less carbon atoms; and n₁₁ represents an integer of 1 or 2.

From the viewpoint of improving the wear resistance and the oxidation stability, as the monovalent hydrocarbon group represented by R¹¹ and R¹², an alkyl group, an alkenyl group, a cycloalkyl group, an aryl group, and so on are preferably exemplified; an aliphatic hydrocarbon group, such as an alkyl group, an alkenyl group, and a cycloalkyl group, is more preferred; an alkyl group or an alkenyl group is still more preferred; and an alkyl group is especially preferred. In the case where such a monovalent hydrocarbon group is an alkyl group or an alkenyl group, it may be either linear or branched; however, from the viewpoint of improving the wear resistance and the oxidation stability, it is preferably linear. In addition, the cycloalkyl group or the aryl group may also be a decalyl group, a naphthyl group, or a polycyclic group having a bicyclo ring.

Such a monovalent hydrocarbon group may be one having a substituent containing an oxygen atom and/or a nitrogen atom, such as a hydroxy group, a carboxy group, an amino group, an amide group, a nitro group, and a cyano group, or one in which a part thereof is substituted with a nitrogen atom, an oxygen atom, a halogen atom, or the like. In the case where the monovalent hydrocarbon group is a cycloalkyl group or an aryl group, it may further have a substituent, such as an alkyl group and an alkenyl group.

In the case where plural R¹¹'s or R¹²'s are present, the monovalent hydrocarbon groups may be the same as or different from each other, and from the viewpoint of improving the wear resistance and the oxidation stability, or taking into consideration easiness of availability, it is preferred that these monovalent hydrocarbon groups are the same as each other.

As for the carbon number of the monovalent hydrocarbon group represented by R¹¹, in the case where the monovalent hydrocarbon group is an alkyl group, from the viewpoint of improving the wear resistance and the oxidation stability, it is preferably 1 or more, and an upper limit thereof is preferably 12 or less, more preferably 6 or less, and still more preferably 3 or less; and in the case where the monovalent hydrocarbon group is an alkenyl group, it is preferably 2 or more, and an upper limit thereof is preferably 12 or less, more preferably 6 or less, and still more preferably 4 or less. In addition, in the case where the monovalent hydrocarbon group is a cycloalkyl group, the carbon number thereof is preferably 5 or more and 20 or less; and in the case where the monovalent hydrocarbon group is an aryl group, the carbon number thereof is preferably 6 or more and 20 or less.

As for the carbon number of the monovalent hydrocarbon group represented by R¹², in the case where the monovalent hydrocarbon group is an alkyl group, from the viewpoint of improving the wear resistance and the oxidation stability, it is preferably 4 or more, more preferably 7 or more, still more preferably 12 or more, and yet still more preferably 16 or more, and an upper limit thereof is preferably 24 or less, more preferably 22 or less, and still more preferably 20 or less. In the case where the monovalent hydrocarbon group is an alkenyl group, the carbon number thereof is preferably 4 or more, more preferably 7 or more, still more preferably 12 or more, and yet still more preferably 16 or more, and an upper limit thereof is preferably 24 or less, more preferably 22 or less, and still more preferably 20 or less. In the case where the monovalent hydrocarbon group is an alkyl group, the carbon number thereof is preferably 5 or more and 20 or less; and in the case where the monovalent hydrocarbon group is an aryl group, the carbon number thereof is preferably 6 or more and 20 or less.

From the viewpoint of improving the wear resistance and the oxidation stability, it is preferred that the carbon number of R¹² is larger than the carbon number of R¹¹.

n₁₁ may be either 1 or 2. When n₁₁ is 1, then the phosphorus-containing compound becomes a phosphinic acid ester having a structure in which one hydrocarbyloxy group and two hydrocarbon groups are connected with the phosphorus atom, and when n₁₁ is 2, then the phosphorus-containing compound becomes a phosphonic acid ester having a structure in which two hydrocarbyloxy groups and one hydrocarbon group are connected with the phosphorus atom. As for the phosphorus-containing compound which is used in the present embodiment, from the viewpoint of improving the wear resistance and the oxidation stability, it is preferred that the number of hydrocarbyloxy groups is larger than the number of hydrocarbon groups, namely, the phosphorus-containing compound is preferably the phosphonic acid ester wherein n₁₁ is 2.

In the present embodiment, the phosphorus-containing compound may be selected from the phosphinic acid ester or the phosphonic acid ester according to the desired performance. In addition, as the phosphorus-containing compound, a single kind of the phosphinic acid ester or the phosphonic acid ester may be used, a plurality of the phosphinic acid esters or the phosphonic acid esters may be used, or a combination thereof may be used.

From the viewpoint of improving the wear resistance and the oxidation stability, the content of the phosphorus-containing compound on the basis of the whole amount of the composition is preferably 0.05% by mass or more, more preferably 0.1% by mass or more, and still more preferably 0.3% by mass or more, and an upper limit thereof is preferably 3.0% by mass or less, more preferably 2.0% by mass or less, and still more preferably 1.0% by mass or less.

### (Base Oil)

The base oil which is contained in the lubricating oil composition for drive system apparatus of the present embodiment may be any of a mineral oil and a synthetic oil.

Examples of the mineral oil include an atmospheric residual oil obtained by atmospheric distillation of a crude oil, such as a paraffinic mineral oil, a naphthenic mineral oil, and an intermediate mineral oil; a distillate oil obtained by vacuum distillation of the foregoing atmospheric residual oil; and a mineral oil obtained by subjecting the foregoing distillate oil to at least one of solvent deasphalting, solvent extraction, hydrocracking, solvent dewaxing, catalytic dewaxing, hydrofining, and so on, for example, a light neutral oil, an intermediate neutral oil, a heavy neutral oil, and a bright stock.

The mineral oil may be classified into any one of groups 1, 2, and 3 in the API (American Petroleum Institute) base oil category, but it is preferably classified into any one of groups 2 and 3 from the viewpoint that the sludge formation can be suppressed.

Examples of the synthetic oil include a poly-α-olefin, such as polybutene, an ethylene-α-olefin copolymer, and an α-olefin homopolymer or copolymer; an ester oil of every kind, such as a polyol ester, a dibasic acid ester, and a phosphoric acid ester; an ether of every kind, such as a polyphenyl ether; a polyglycol; an alkylbenzene; an alkylnaphthalene; and a GTL base oil obtained by isomerizing a wax (GTL wax (Gas To Liquids WAX)) produced through synthesis by a Fischer-Tropsch process, or the like.

In the present embodiment, the base oil may be at least one mineral oil, at least one synthetic oil, or a mixed oil obtained by mixing at least one mineral oil and at least one synthetic oil. In the present embodiment, a mineral oil is preferred from the viewpoint of inexpensiveness and obtaining more excellent viscosity characteristics.

Although the viscosity of the base oil is not particularly restricted, from the viewpoint of preventing seizure at high temperatures from occurring, a kinematic viscosity at 40°C is preferably 3.0 mm²/s or more, more preferably 4.0 mm²/s or more, and still more preferably 5.0 mm²/s or more. In addition, from the viewpoint of securing low-temperature fluidity, the kinematic viscosity at 40°C is preferably 30.0 mm²/s or less, more preferably 20.0 mm²/s or less, and still more preferably 10.0 mm²/s or less. From the same viewpoint, a kinematic viscosity at 100°C of the base oil is preferably 1.0 mm²/s or more, more preferably 1.5 mm²/s or more, and still more preferably 2.0 mm²/s or more. In addition, an upper limit thereof is preferably 15.0 mm²/s or less, more preferably 10.0 mm²/s or less, and still more preferably 5.0 mm²/s or less. A viscosity index of the base oil is preferably 70 or more, more preferably 73 or more, and still more preferably 75 or more. In this specification, the kinematic viscosity and the viscosity index are each a value measured using a glass-made capillary viscometer in conformity with JIS K2283:2000. When the kinematic viscosity and the viscosity index fall within the aforementioned ranges, appropriate viscosity characteristics as the lubricating oil composition for drive system apparatus are provided, and the wear resistance and the oxidation stability are improved.

From the viewpoint of exhibiting a more appropriate lubricating performance as the lubricating oil composition for drive system apparatus, a density at 15°C of the base oil is preferably 0.80 g/cm³ or more, more preferably 0.82 g/cm³ or more, and still more preferably 0.83 g/cm³ or more, and an upper limit thereof is preferably 0.95 g/cm³ or less, more preferably 0.93 g/cm³ or less, and still more preferably 0.88 g/cm³ or less. In this specification, the density at 15°C is a value measured in conformity with JIS K2249:2011.

From the viewpoint of providing a more appropriate viscosity as the lubricating oil composition for drive system apparatus and improving the wear resistance and the oxidation stability, the content of the base oil on the basis of the whole amount of the composition is preferably 60% by mass or more, more preferably 70% by mass or more, and still more preferably 85% by mass or more. In addition, an upper limit thereof is preferably 99.95% by mass or less, more preferably 99.9% by mass or less, and still more preferably 99.5% by mass or less.

### (Other Additives)

The lubricating oil composition for drive system apparatus of the present embodiment is one containing the aforementioned base oil and phosphorus-containing compound, and it may be one composed of the base oil and the phosphorus-containing compound or may also be one containing, in addition to the base oil and the phosphorus-containing compound, other additives, such as a viscosity index improver, a dispersant, an antioxidant, an extreme pressure agent, a metal deactivator, an anti-foaming agent, a friction reducer, and an oily agent. These other additives can be used alone or in combination of plural kinds thereof.

A total content of the other additives may be appropriately determined according to the desire and is not particularly restricted; however, taking into consideration an effect to be brought by the addition of other additives, it is preferably 0.1% by mass or more, more preferably 0.2% by mass or more, and still more preferably 0.3% by mass or more on the basis of the whole amount of the composition, and an upper limit thereof is preferably 20% by mass or less, more preferably 15% by mass or less, and still more preferably 10% by mass or less.

Examples of the viscosity index improver include a polymethacrylate, such as a non-dispersion-type polymethacrylate and a dispersion-type polymethacrylate, each having a mass average molecular weight (Mw) of preferably 500 to 1,000,000, more preferably 5,000 to 800,000, and still more preferably 10,000 to 700,000; and a polymer, such as an olefin-based copolymer (for example, an ethylene-propylene copolymer), a dispersion-type olefin-based copolymer, and a styrene-based copolymer (for example, a styrene-diene copolymer and a styrene-isoprene copolymer), each having a mass average molecular weight (Mw) of 800 to 300,000, more preferably 10,000 to 200,000, and still more preferably 20,000 to 150,000.

Examples of the dispersant include an ashless dispersant, such as a boron-free succinimide, a boron-containing succinimide, a benzylamine, a boron-containing benzylamine, a succinic acid ester, and a monovalent or divalent carboxylic acid amide represented by a fatty acid or succinic acid.

Examples of the antioxidant include an amine-based antioxidant, such as a diphenylamine-based antioxidant and a naphthylamine-based antioxidant; a phenol-based antioxidant, such as a monophenol-based antioxidant, a diphenol-based antioxidant, and a hindered phenol-based antioxidant; and a molybdenum-based antioxidant, such as a molybdenum amine complex obtained through a reaction of molybdenum trioxide and/or molybdic acid with an amine compound.

Examples of the extreme pressure agent include a sulfur-based extreme pressure agent, such as sulfurized oils and fats, a sulfurized fatty acid, a sulfurized ester, a sulfurized olefin, dihydrocarbyl polysulfide, a thiadiazole compound, an alkylthiocarbamoyl compound, and a thiocarbamate compound; a sulfur-nitrogen-based extreme pressure agent, such as a zinc dialkylthiocarbamate (Zn-DTC) and a molybdenum dialkylthiocarbamate (Mo-DTC); and a sulfur-phosphorus-based extreme pressure agent, such as a zinc dialkyldithiophosphate (Zn-DTP) and a molybdenum dialkyldithiophosphate (Mo-DTP).

Examples of the metal deactivator include a benzotriazole-based compound, a tolyltriazole-based compound, a thiadiazole-based compound, and an imidazole-based compound; examples of the anti-foaming agent include a silicone-based anti-foaming agent, such as a silicone oil and a fluorosilicone oil, and an ether-based anti-foaming agent, such as a fluoroalkyl ether; examples of the friction reducer include an aliphatic alcohol, a fatty acid, a fatty acid ester, an aliphatic amine, an aliphatic amine salt, and an aliphatic amide; and examples of the oily agent include a glycerol ester, such as glycerol monooleate and glycerol dioleate.

### (Various Physical Properties of Lubricating Oil Composition for Drive System Apparatus)

From the viewpoint of preventing seizure at high temperatures from occurring and securing low-temperature fluidity, a kinematic viscosity at 40°C of the lubricating oil composition for drive system apparatus of the present embodiment is preferably 3.0 mm²/s or more, more preferably 4.0 mm²/s or more, and still more preferably 5.0 mm²/s or more, and an upper limit thereof is preferably 30.0 mm²/s or less, more preferably 20.0 mm²/s or less, and still more preferably 10.0 mm²/s or less. From the same viewpoint, a kinematic viscosity at 100°C of the lubricating oil composition for drive system apparatus of the present embodiment is 2.0 mm²/s or more, and an upper limit thereof is preferably 15.0 mm²/s or less, more preferably 10.0 mm²/s or less, and still more preferably 5.0 mm²/s or less. In addition, a viscosity index of the lubricating oil composition for drive system apparatus of the present embodiment is preferably 70 or more, more preferably 75 or less, and still more preferably 80 or more.

A wear mark width of the lubricating oil composition for drive system apparatus of the present embodiment is preferably 0.55 mm or less, more preferably 0.50 mm or less, and still more preferably 0.40 mm or less. In addition, it is preferred that no galling mark occurs. Here, the wear mark width and the galling mark are measured by methods described in the section of Examples.

With respect to the oxidation stability of the lubricating oil composition for drive system apparatus of the present embodiment, the elution amount of copper is preferably small as far as possible, and specifically, it is preferably 10.0 ppm by mass or less, more preferably 8.0 ppm by mass or less, and still more preferably 3.0 ppm by mass or less. The elution amount of iron is preferably small as far as possible, and specifically, it is preferably 5.0 ppm by mass or less, more preferably 3.0 ppm by mass or less, and still more preferably 1.0 ppm by mass or less.

A lacquer rating is preferably 1 or less.

An n-pentane-insoluble content is preferably small as far as possible, and specifically, it is preferably less than 0.02% by mass, more preferably 0.01% by mass or less, and still more preferably 0.005% by mass or less.

A Millipore value is preferably small as far as possible, and specifically, it is preferably less than 5.0 mg/100 mL, more preferably 3.0 mg/100 mL or less, and still more preferably 2.0 mg/100 mL or less.

A rate of change in kinematic viscosity at 40°C is preferably small as far as possible, and specifically, it is less than ±1.0%, preferably ±0.8% or less, and still more preferably ±0.6% or less.

The aforementioned elution amount of copper, elution amount of iron, lacquer rating, n-pentane-insoluble content, Millipore value, and rate of change of kinematic viscosity at 40°C are determined by methods described in the section of Examples.

### (Application)

The lubricating oil composition for drive system apparatus of the present embodiment is one which is excellent in wear resistance and oxidation stability, and in order to utilize these excellent performances, it is applied to a drive system apparatus, such as a shock absorber, a transmission, and a power steering. Above all, the lubricating oil composition for drive system apparatus of the present embodiment is preferably applied to a shock absorber, more preferably applied to a shock absorber for an automobile, such as a four-wheel vehicle and a two-wheel vehicle, and especially preferably applied to a shock absorber for a four-wheel vehicle.

In addition, from the viewpoint of effectively utilizing the excellent wear resistance, among the aforementioned apparatuses, the lubricating oil composition for drive system apparatus of the present embodiment can be suitably applied to an apparatus provided with a part using a polytetrafluoroethylene (PTFE) material having a reinforcing material, such as a glass fiber, graphite, and a carbon fiber, blended therein. For example, the lubricating oil composition for drive system apparatus of the present embodiment is suitably applied to an apparatus using a sliding bearing made of a PTFE-coated bronze sintered material, a PTFE material-made piston ring, etc., the apparatus being a drive system apparatus requiring lubrication between a piston rod and a bush and between an inner tube and a piston ring, and preferably a shock absorber, particularly a shock absorber for automobile, such as a four-wheel vehicle and a two-wheel vehicle, and especially a shock absorber for four-wheel shock absorber.

### [Production Method of Lubricating Oil Composition]

The production method of a lubricating oil composition of the present embodiment is a method including blending a base oil and a phosphorus-containing compound represented by the following general formula (1).

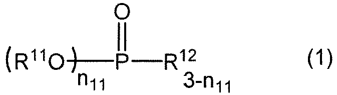

In the general formula (1), R¹¹ and R¹² each independently represent a monovalent hydrocarbon group having 1 or more and 30 or less carbon atoms; and n₁₁ represents an integer of 1 or 2.

In the production method of a lubricating oil composition of the present embodiment, the base oil and the phosphorus-containing compound are the same as those described to be contained in the lubricating oil composition of the present invention, and the contents thereof are also the same as those described as the contents in the lubricating oil composition of the present embodiment. In addition, in the production method of a lubricating oil composition of the present embodiment, other components than the base oil and the phosphorus-containing compound, for example, the other additives described as the components which may be contained in the lubricating oil composition of the present embodiment may be blended.

On the occasion of producing the lubricating oil composition, in blending the base oil and the phosphorus-containing compound, the blending order is not particularly restricted, they may be blended in any order. In addition, in the case of blending the other additives, the blending order thereof is not particularly restricted, and for example, various additives which are used as the other additives may be sequentially blended into the blend of the base oil and the phosphorus-containing compound.

### [Lubrication Method of Drive System Apparatus]

The lubrication method of a drive system apparatus of the present embodiment is a method including using the aforementioned lubricating oil composition for drive system apparatus of the present invention.

The aforementioned lubricating oil composition for drive system apparatus of the present invention is excellent in wear resistance and oxidation stability, and therefore, the lubrication method of the present embodiment can be suitably adopted for lubrication of a drive system apparatus, such as a shock absorber, a transmission, and a power steering, particularly a shock absorber, especially a shock absorber for automobile, such as a four-wheel vehicle and a two-wheel vehicle, and more especially a shock absorber for four-wheel shock absorber. Such a drive system apparatus is typically provided with a part using a polytetrafluoroethylene (PTFE) material having a reinforcing material, such as a glass fiber, graphite, and a carbon fiber, blended therein, for example, a part of a sliding bearing made of a PTFE-coated bronze sintered material, a PTFE material-made piston ring, etc., and lubrication in such a part, more specifically, lubrication between a piston rod and a bush, and between an inner tube and a piston ring becomes necessary. By using the lubricating oil composition for drive system apparatus of the present embodiment, not relying upon the material relating to the sliding portion, namely the material relating to the sliding portion being not limited to metal-metal, even in the reinforcing material-blended PTFE material-metal, the occurrence of a wear mark and a galling mark can be suppressed, and the durability of the drive system apparatus can be improved. Therefore, the lubrication method of a drive system apparatus of the present embodiment can be especially suitably adopted for a drive system apparatus provided with a part using polytetrafluoroethylene among drive system apparatuses.

### [Drive System Apparatus]

The drive system apparatus of the present embodiment is one using the aforementioned lubricating oil composition for drive system apparatus of the present embodiment. As the drive system apparatus of the present embodiment, there is suitably exemplified a drive system apparatus, such as a shock absorber, a transmission, and a power steering, particularly a shock absorber, especially a shock absorber for automobile, such as a four-wheel vehicle and a two-wheel vehicle, and more especially a shock absorber for four-wheel shock absorber.

In view of the fact that the aforementioned lubricating oil composition for drive system apparatus of the present invention has excellent wear resistance such that it is able to suppress the occurrence of a wear mark and a galling mark even when the material relating to the sliding portion is not limited to metal-metal but is PTFE material-metal, and as a result, the durability of the drive system apparatus of the present embodiment becomes high. Taking into consideration the characteristic features of the lubricating oil composition to be used for the drive system apparatus of the present embodiment, the drive system apparatus of the present invention is preferably one provided with a part using a polytetrafluoroethylene (PTFE) material having a reinforcing material, such as a glass fiber, graphite, and a carbon fiber, blended therein, for example, one provided with a part of a sliding bearing made of a PTFE-coated bronze sintered material, a PTFE material-made piston ring, etc.

### Examples

Next, the present invention is more specifically described by reference to Examples, but it should be construed that the present invention is by no means limited by these Examples.

Measurements and evaluations of properties and performances of a base oil and lubricating oil compositions were performed by the following methods.

### (1) Kinematic Viscosity

The kinematic viscosity at each of 40°C and 100°C was performed in conformity with JIS K2283:2000.

### (2) Viscosity Index (VI)

The viscosity index was measured in conformity with JIS K2283:2000.

### (3) Viscosity at 15°C

The viscosity at 15°C was measured in conformity with JIS K2249:2011.

### (4) Evaluation of Wear Resistance (Wear Mark Width)

With respect to the lubricating oil composition of each of the Examples and Comparative Examples as obtained by mixing the respective components described in Table 1, by using a ball-on-disk-type reciprocating friction tester (Bowden-Leben type), a friction test under a condition of a load of 29.4 N, a temperature of 100°C, a slipping velocity of 50 mm/s, a stroke of 10 mm, and a time of 30 minutes, was performed, to measure the wear mark width on the disk. The ball is a glass sphere (diameter: 12 mm), and the material of the disk is SPCC-SB. It may be said that the smaller the wear mark width, the more excellent the wear resistance.

### (5) Evaluation of Wear Resistance (Galling Mark)

With respect to the lubricating oil composition of each of the Examples and Comparative Examples as obtained by mixing the respective components described in Table 1, the same friction test as in the evaluation of wear resistance set forth in the above (4) was performed, to visually confirm the presence or absence of a galling mark in the end to be reciprocated on the disk. It may be said that when no galling mark appears, the wear resistance is excellent.

### (6) Evaluation of Oxidation Stability

With respect to the lubricating oil composition of each of the Examples and Comparative Examples as obtained by mixing the respective components described in Table 1, the following tests (a) to (e) were performed. By designating the elution amount of copper (ppm by mass) as A, the elution amount of iron (ppm by mass) as B, the lacquer rating as C, the n-pentane insoluble content (% by mass) as D, the Millipore value (mg/100 mL) as E, and the rate of change (%) in kinematic viscosity at 40°C as F, respectively, the case where A is 10.0 ppm by mass or less, the case where B is 5.0 ppm by mass or less, the case where C is 1 or less, the case where D is less than 0.02% by mass, the case where E is less than 5.0 mg/100 mL, and the case where F is less than ±1.0% were judged to be accepted. The acceptance number regarding the six items of A to F was evaluated according to the following criteria, to undergo comprehensive evaluation of the oxidation stability. The case where the score of evaluation is 1 is judged to be accepted.
1: The lubricating oil composition was accepted in all of the six items of A to F.
2: The lubricating oil composition was accepted in the four or more and five or less items of A to F.
3: The lubricating oil composition was accepted in the three or less items of A to F.

### (a) Measurement of Elution Amounts of Copper and Iron

With respect to the lubricating oil composition of each of the Examples and Comparative Examples as obtained by mixing the respective components described in Table 1, in the ISOT test in conformity with JIS K2514-1:2013, plate-shaped iron catalyst and copper catalyst, each of which is a catalyst, were added to the lubricating oil composition, the sample was degraded at a test temperature of 120°C and at a stirring rate of 1,300 rpm for a test time of 24 hours, and then, the elution amount of copper (ppm by mass) and the elution amount of iron (ppm by mass) were measured. The elution amount of copper was designated as "A", and the elution amount of iron was designated as "B".

### (b) Measurement of Lacquer Rating

With respect to the lubricating oil composition of each of the Examples and Comparative Examples as obtained by mixing the respective components described in Table 1, the oxidation test in conformity with JIS K2514-1:2013 was performed, and the lacquer rating was determined through comparison with an evaluation sample (color scale) and designated as "C".

### (c) Measurement of n-Pentane-Insoluble Content

The lubricating oil composition of each of the Examples and Comparative Examples as obtained by mixing the respective components described in Table 1 was used as a sample oil and subjected to the same test as the ISOT test performed in the measurement of elution amounts of copper and iron as set forth in the above (a), and then, the n-pentane-insoluble content (Method A) (% by mass) was measured. The n-pentane-insoluble content (Method A) (% by mass) was designated as "D".

### (d) Measurement of Millipore Value

The lubricating oil composition of each of the Examples and Comparative Examples as obtained by mixing the respective components described in Table 1 was used as a sample oil; in a sample container, 300 mL of the sample oil was charged in a cylinder container; and plate-shaped iron catalyst and copper catalyst, each of which is a catalyst, were added, followed by heating at 150°C for 24 hours while blowing air at a rate of 10 L/h through an air blowing tube, to perform the Indiana oxidation test. Subsequently, in conformity with SAE-ARP-785-63:1996, a deposit (average pore diameter: 0.8 µm) in 300 mL of the sample oil after the Indiana oxidation test was filtered and collected, and the resulting mass was measured as the Millipore mass (mg/100 mL). The Millipore value (mg/100 mL) was designated as "E".

### (e) Measurement of Rate of Change in Kinematic Viscosity at 40°C

The lubricating oil composition of each of the Examples and Comparative Examples as obtained by mixing the respective components described in Table 1 was used as a sample oil; with respect to an ultrasonic wave-treated product obtained through irradiation with ultrasonic waves for 60 minutes in conformity with JASO M347-95 and an untreated sample oil, the kinematic viscosity at 40°C was measured in conformity with JIS K2283:2000; and when the kinematic viscosity at 40°C of the treated product was defined as v₁, and the kinematic viscosity at 40°C of the untreated product was defined as v₀, a rate of reduction ((vo - v₁)/v₀ × 100) was defined as the rate of change in kinematic viscosity at 40°C and designated as "F".

### (Preparation of Lubricating Oil Compositions of Examples 1 and 2 and Comparative Examples 1 to 13)

Components were blended according to a formulation shown in Table 1, to prepare lubricating oil compositions. With respect to each of the obtained lubricating oil compositions, the evaluation results regarding the respective properties and performances as measured by the aforementioned methods are shown in Table 1.

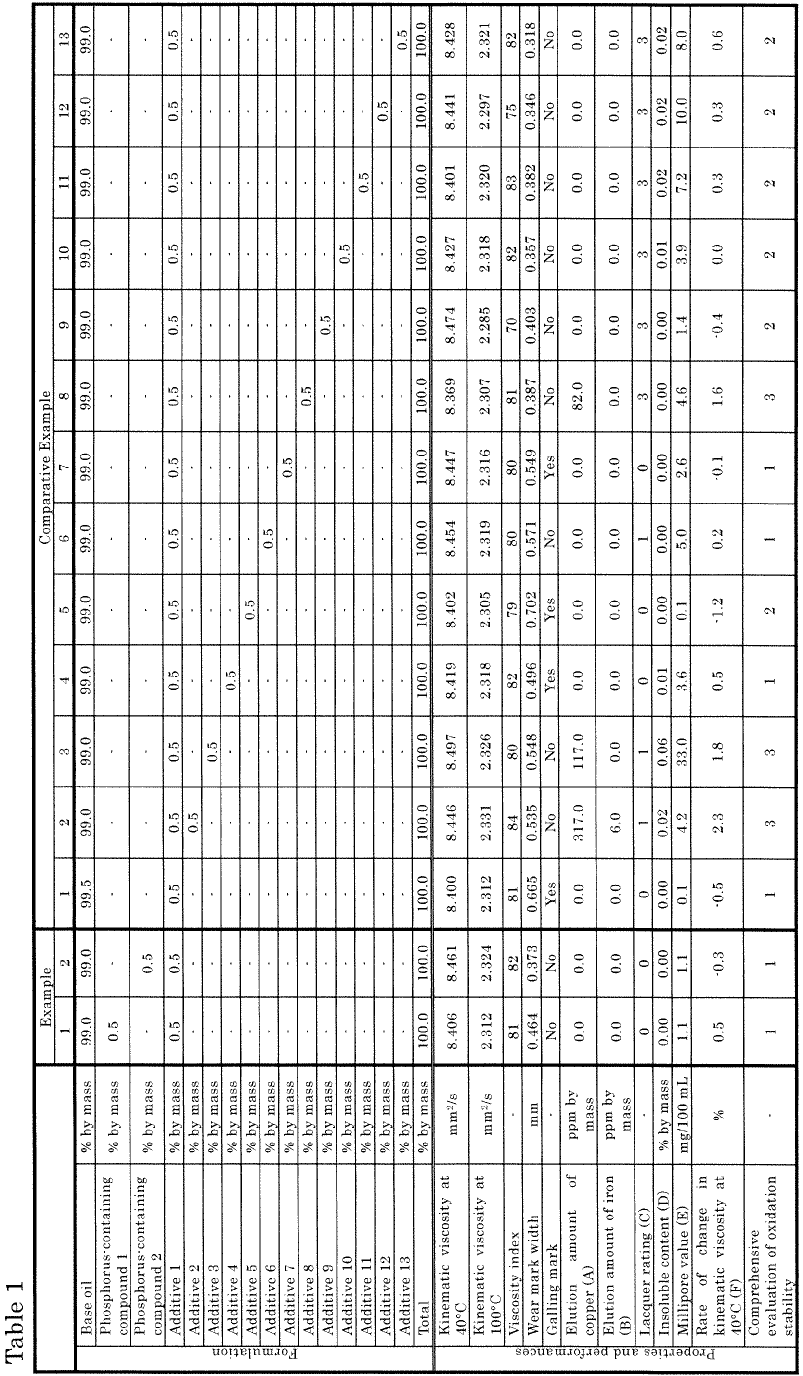

Details of the respective components used in the present Examples as shown in Table 1 are as follows.
- Base oil:
   Paraffinic mineral oil (kinematic viscosity at 40°C: 8.386 mm²/s, kinematic viscosity at 100°C: 2.300 mm²/s, viscosity index: 78, viscosity at 15°C: 0.8682 g/cm³)
- Phosphorus-containing compound 1:
   Phosphonic acid ester represented by the general formula (1), wherein R¹¹ is an ethyl group, R¹² is a stearyl group, and nn is 2 (diethyl stearylphosphonate)
- Phosphorus-containing compound 2:
   Phosphonic acid ester represented by the general formula (1), wherein R¹¹ is a methyl group, R¹² is a stearyl group, and n₁₁ is 2 (dimethyl stearylphosphonate)
- Additive 1:
   Di-t-butyl paracresol (antioxidant)
- Additive 2:
   Sesquioleyl acid phosphate (mixture of monooleyl acid phosphate and dioleyl acid phosphate)
- Additive 3:
   Amine salt of acidic phosphoric acid ester (mixture of an amine salt of monomethyl acid phosphate and monoethyl acid phosphate monoethyl)
- Additive 4:
   Zinc dialkyldithiophosphate (containing a primary propyl group, a butyl group, and a hexyl group)
- Additive 5:
   Tricresyl phosphate
- Additive 6:
   Distearyl pentaerythritol diphosphite
- Additive 7:
   Zinc dialkyldithiophosphate (containing a secondary propyl group and a hexyl group)
- Additive 8:
   3-(Diisobutoxy-thiophosphorylsulfany1)-2-methyl-propionic acid
- Additive 9:
   2,5-Bis[(1,1,3,3-tetramethylbutyl)dithio]-1,3,4-thiadiazole
- Additive 10:
   Dilauryl hydrogenphosphite
- Additive 11:
   Sesquilauryl hydrogenphosphite (mixture of monolauryl hydrogenphosphite and dilauryl hydrogenphosphite, acid value: 60 mgKOH/g)
- Additive 12:
   Sesquilauryl hydrogenphosphite (mixture of monolauryl hydrogenphosphite and dilauryl hydrogenphosphite, acid value: 70 mgKOH/g)
- Additive 13:
   Sesquilauryl hydrogenphosphite (mixture of monolauryl hydrogenphosphite and dilauryl hydrogenphosphite, acid value: 80 mgKOH/g)

In the view of the fact that in the lubricating oil compositions of Examples 1 and 2, the wear mark width is 0.55 mm or less, no galling mark occurs, the elution amount of copper is 10.0 ppm by mass or less, the elution amount of iron is 5.0 ppm by mass, the lacquer rating is 1 or less, the n-pentane-insoluble content is less than 0.02% by mass, the Millipore value is less than 5.0 mg/100 mL, and the rate of change in kinematic viscosity at 40°C is less than ±1.0%, it has been confirmed that the lubricating oil composition of the present embodiment has excellent wear resistance and oxidation stability.

On the other hand, the lubricating oil compositions of Comparative Examples 1 to 13 not containing the phosphorus-containing compound represented by the general formula (1) could not satisfy any of the performances of wear resistance and an oxidative deterioration index, so that it cannot be said that they had excellent wear resistance and oxidation stability.

In addition, for example, though the lubricating oil compositions of Comparative Examples 4 and 7 are each one containing the zinc dialkyldithiophosphate (ZnDTP) which has hitherto been commonly used as the anti-wear agent, and in all of them, the galling mark occurred, so that it cannot be said that they had excellent wear resistance. The lubricating oil composition of Comparative Example 5 is one containing tricresyl phosphate which has hitherto been commonly used as the extreme pressure agent; however, the tricresyl phosphate is different from the phosphorus-containing compound represented by the general formula (1) from the standpoint that all of the hydrocarbon groups are connected with the phosphorus atom via an oxygen atom, and the lubricating oil composition of Comparative Example 5 does not satisfy any of the performances of wear mark width and galling mark, so that it cannot be said that it had excellent wear resistance. Although the lubricating oil composition of Comparative Example 2 is one containing oleyl acid phosphate, the oleyl acid phosphate is different from the phosphorus-containing compound represented by the general formula (1) from the standpoint that the hydroxy group is connected with the phosphorus atom, and it cannot be said that it had excellent oxidation stability. Although the lubricating oil compositions of Comparative Examples 10 to 13 are each one containing lauryl hydrogenphosphite, the lauryl hydrogenphosphite is different from the phosphorus-containing compound represented by the general formula (1) from the standpoint that the hydrogen atom is connected with the phosphorus atom, and it cannot be said that they had excellent oxidation stability.

In addition, from the results of Comparative Examples 4, 6, and 7, it is noted that it is not the case where in the wear resistance, so long as any one of the wear mark width and the galling mark is satisfied, the other is also satisfied.

In the light of the above, from the results of the Examples and Comparative Examples, it has been confirmed that in view of the fact that the lubricating oil composition for drive system apparatus of the present embodiment contains the specified phosphorus-containing compound, with respect to the wear resistance, it is able to exhibit an excellent performance relative to the lubrications having different properties from each other, and it is also excellent in the oxidation stability.

## Claims

1. A lubricating oil composition for drive system apparatus comprising a base oil and a phosphorus-containing compound represented by the general formula (1): 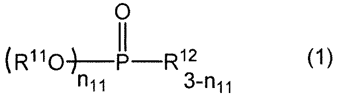 wherein,
R¹¹ and R¹² each independently represent a monovalent hydrocarbon group having 1 or more and 30 or less carbon atoms; and n₁₁ represents an integer of 1 or 2.

2. The lubricating oil composition for drive system apparatus according to claim 1, wherein in the general formula (1), R¹¹ is a monovalent aliphatic hydrocarbon group having 1 or more and 12 or less carbon atoms.

3. The lubricating oil composition for drive system apparatus according to claim 1 or 2, wherein in the general formula (1), R¹² is a monovalent aliphatic hydrocarbon group having 4 or more and 24 or less carbon atoms.

4. The lubricating oil composition for drive system apparatus according to any one of claims 1 to 3, wherein in the general formula (1), the hydrocarbon group is an alkyl group or an alkenyl group.

5. The lubricating oil composition for drive system apparatus according to any one of claims 1 to 4, wherein in the general formula (1), the carbon number of R¹² is larger than the carbon number of R¹¹.

6. The lubricating oil composition for drive system apparatus according to any one of claims 1 to 5, wherein in the general formula (1), R¹¹ is an alkyl group having 1 or more and 6 or less carbon atoms, and R¹² is an alkyl group having 7 or more and 20 or less carbon atoms.

7. The lubricating oil composition for drive system apparatus according to any one of claims 1 to 6, wherein the content of the phosphorus-containing compound on the basis of the whole amount of the composition is 0.05% by mass or more and 3.0% by mass or less.

8. The lubricating oil composition for drive system apparatus according to any one of claims 1 to 7, wherein the drive system apparatus is a shock absorber.

9. A method for producing a lubricating oil composition for drive system apparatus, comprising blending a base oil and a phosphorus-containing compound represented by the following general formula (1): 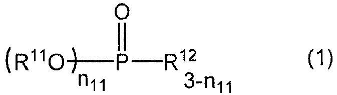 wherein,
R¹¹ and R¹² each independently represent a monovalent hydrocarbon group having 1 or more and 30 or less carbon atoms; and nn represents an integer of 1 or 2.

10. A lubrication method of a drive system apparatus, comprising using the lubricating oil composition for drive system apparatus as set forth in any one of the above 1 to 8.

11. The lubrication method of a drive system apparatus according to claim 10, wherein the drive system apparatus is one provided with a part using polytetrafluoroethy lene.

12. The lubrication method of a drive system apparatus according to claim 10 or 11, wherein the drive system apparatus is a shock absorber.

13. A drive system apparatus comprising using the lubricating oil composition for drive system apparatus according to any one of claims 1 to 8.

14. The drive system apparatus according to claim 13, wherein the drive system apparatus is one provided with a part using polytetrafluoroethylene.

15. The drive system apparatus according to claim 13 or 14, which is a shock absorber.
